# EUROPEAN PATENT APPLICATION

(11) **EP 2 981 105 A1**
(43) Date of publication of application: **03.02.2016**
(21) Application number: 14774961.8
(22) Date of filing: 20.03.2014
(51) Int. Cl.: H04W 4/04, H04M 11/00, H04W 8/26, H04W 84/22

(54) **COMMUNICATION SYSTEM, RELAY DEVICE AND COMMUNICATION METHOD**

(30) Priority: 27.03.2013 JP 2013066723
(71) Applicant: NTT DOCOMO, INC., Chiyoda-ku Tokyo 100-6150 (JP)
(72) Inventor: KOSHIMIZU, Takashi, Tokyo 100-6150 (JP); MIZUGUCHI, Noriko, Tokyo 100-6150 (JP); KOYAMA, Daisuke, Tokyo 100-6150 (JP); TSURUSAKI, Aya, Tokyo 100-6150 (JP); SASADA, Keisuke, Tokyo 100-6150 (JP)
(74) Representative: Hoffmann Eitle
(86) International application number: PCT/JP2014/057793
(87) International publication number: WO 2014/156967

(57) **Abstract**

A relay apparatus 100A holds an address management table TB1 in which an identifier of a terminal device 200A and an address of the terminal device 200A in a near field communication network are associated with each other, generates a terminal device-destined frame based on the identifier of the terminal device 200A in a received downlink packet, the terminal device-destined frame containing a command destined to the address of the terminal device 200A associated with the identifier of the terminal device 200A in the address management table TB1, and transmits the generated terminal device-destined frame to the near field communication network 60A.

## Description

### TECHNICAL FIELD

The present invention relates to a communication system including a near field communication network configured by multiple terminal devices, and a wide area communication network covering a wider area than the near field communication network, and relates to a relay apparatus and a communication method.

### BACKGROUND ART

IEEE802.15.4e/g is a near field communication technique (mainly for a physical layer and a MAC layer) that autonomously builds distributed multi-hop routing using a radio band of 920 MHz. IEEE802.15.4e/g has been standardized in order to be applied to a Machine Type Communication (MTC) for reading electric power meters of households or doing the like (For example, Non-Patent Literature 1). An autonomous distributed multi-hop radio communication technique in accordance with IEEE802.15.4e/g can be used solely, but is desired to be used for communications with a server executing management of data of electric power meters, etc. (for example, a Meter Data Management System (MDMS)) via a wide area network (WAN) such as a public radio communication network (3G or LTE).

### PRIOR ART DOCUMENT

### NON-PATENT DOCUMENT

Non-patent document 1: Ubiquitous Sensor Networks, the journal of Institute of electronics, information and communication engineers, pp. 772-778, Vol. 95 No.9, 2012.

### SUMMARY OF THE INVENTION

However, the following problem arises when executing management of data of electric power meters, etc. via a public radio communication network (3G or LTE). Specifically, the number of electric power meters installed in households is enormous. Accordingly it is necessary to implement efficient control of such an enormous number of electric power meters and data acquisition from the electric power meters.

With regard to this problem, a standard for a smart utility network (SUN) conforming to IEEE802.15.4e/g has also been defined. However, when implementing the control and data acquisition from electric power meters by connecting a SUN to a public radio communication network, address allocation and establishment of communication bearers in the public radio communication network corresponding to the number of electric power meters are difficult due to the occurrence of technical and cost constraints.

Hence, the present invention has been made in view of such circumstances, and has thus an objective to provide a communication system, a relay apparatus, and a communication method which are capable of implementing control of devices such as electric power meters and data acquisition from the devices efficiently by connecting a near field communication network (such as a smart utility network) to a wide area communication network (such as a public radio communication network).

A first feature of the present invention is summarized as a communication system including: a terminal device; and a relay apparatus provided between a near field communication network configured by a plurality of the terminal devices, and a wide area communication network covering a wider area than the near field communication network. Here, the relay apparatus includes: a downlink packet reception unit for receiving a downlink packet from a server connected to the wide area communication network, the downlink packet containing an identifier of the terminal device and a command to the terminal device; a table holding unit for holding an address management table in which the identifier of the terminal device and an address of the terminal device in the near field communication network are associated with each other; and a downlink transmission frame processing unit for generating a terminal device-destined frame based on the identifier of the terminal device contained in the downlink packet received by the downlink packet reception unit, the terminal device-destined frame containing the command destined to the address of the terminal device associated with the identifier of the terminal device in the address management table, and to transmit the generated terminal device-destined frame to the near field communication network; and the terminal device comprises a reception processing unit for receiving the terminal device-destined frame from the relay apparatus, and execute processing based on the command contained in the terminal device-destined frame.

A second feature of the present invention is summarized as a relay apparatus provided between a near field communication network configured by a terminal device and a plurality of the terminal devices, and a wide area communication network covering a wider area than the near field communication network, the relay apparatus including: a downlink packet reception unit for receiving a downlink packet containing an identifier of the terminal device and a command to the terminal device from a server connected to the wide area communication network; a table holding unit for holding an address management table in which the identifier of the terminal device and an address of the terminal device in the near field communication network are associated with each other; and a downlink transmission frame processing unit for generating a terminal device-destined frame based on the identifier of the terminal device contained in the downlink packet received by the downlink packet reception unit, the terminal device-destined frame containing the command destined to the address of the terminal device associated with the identifier of the terminal device in the address management table, and to transmit the generated terminal device-destined frame to the near field communication network.

A third feature of the present invention is summarized as a communication method to be executed by a terminal device and a relay apparatus provided between a near field communication network configured by a plurality of the terminal devices, and a wide area communication network covering a wider area than the near field communication network, the method including the steps of: causing the relay apparatus to receive a downlink packet from a server connected to the wide area communication network, the downlink packet containing the identifier of the terminal device and a command to the terminal device; causing the relay apparatus to generate a terminal device-destined frame based on the identifier of the terminal device contained in the received downlink packet, and based on an address management table in which the identifier of the terminal device and an address of the terminal device in the near field communication network are associated with each other, and to transmit the generated terminal device-destined frame to the near field communication network, the terminal device-destined frame containing the command destined to the address of the terminal device associated with the identifier of the terminal device in the address management table; and causing the terminal device to receive the terminal device-destined frame from the relay apparatus, and to execute processing based on the command contained in the terminal device-destined frame.

### BRIEF DESCRIPTION OF THE DRAWINGS

[Fig. 1] Fig. 1 is an overall schematic configuration diagram of a communication system 10 according an embodiment of the present invention.
[Fig. 2] Fig. 2 is a functional block configuration diagram of a relay apparatus 100A according to the embodiment of the present invention.
[Fig. 3] Fig. 3 is a functional block configuration diagram of a terminal device 200A according to the embodiment of the present invention.
[Fig. 4] Fig. 4 includes diagrams illustrating configuration examples of a downlink packet P_{DOWN}, a downlink packet P'_{DOWN} and a server-destined packet P_{UP} according to the embodiment of the present invention.
[Fig. 5] Fig. 5 is a diagram illustrating a sequence of transmitting commands to the terminal devices 200A, 201A from a MDMS 20 according to the embodiment of the present invention.
[Fig. 6] Fig. 6 is a diagram illustrating a sequence of transmitting data from the terminal devices 200A, 201A to the MDMS 20 according to the embodiment of the present invention.

### MODE FOR CARRYING OUT THE INVENTION

Next, an embodiment of the present invention will be described. Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### (1) Overall Schematic Configuration of Communication System

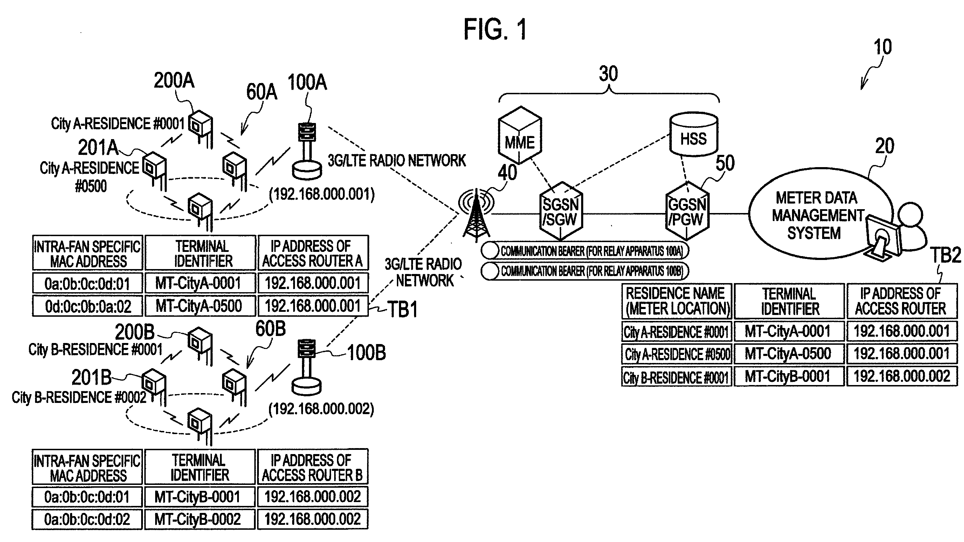

Fig. 1 is an overall schematic configuration diagram of a communication system 10 according to the present embodiment. As illustrated in Fig. 1, the communication system 10 includes a meter data management system 20 (hereinafter, the MDMS 20), a public radio communication network 30, near field communication networks 60A, 60B, and relay apparatuses 100A, 100B.

The MDMS 20 manages multiple terminal devices (for example, terminal devices 200A, 201A) configuring each of the near field communication networks 60A, 60B. Specifically, the MDMS 20 is a server connected to the public radio communication network 30, and conf igured to transmit commands to the terminal devices and acquire data transmitted from the terminal devices.

The public radio communication network 30 is a radio network conforming to 3G or LTE specified in the 3rd Generation Partnership Project (3GPP). The public radio communication network 30 includes a radio base station 40 and a Gateway GPRS Support Node/Packet Data Network Gateway 50 (hereinafter, the GGSN/PGW 50). In addition, the public radio communication network 30 may include a Mobility Management Entity (MME), a Serving GPRS Support Node/Serving Gateway (SGSN/SGW), and a Home Subscriber Server (HSS). In the present embodiment, the public radio communication network 30 constitutes a wide area communication network.

Each of the near field communication networks 60A, 60B is a near field communication network conforming to IEEE802.15.4e/g, and constitutes what is termed a smart utility network (SUN) or a field area network (FAN). Note that the FAN is mainly explained as an example in the following description.

The near field communication networks 60A, 60B are each configured by multiple terminal devices. Specifically, the near field communication network 60A is configured by the terminal devices 200A, 201A, and the like, whereas the near field communication network 60B is constituted by the terminal devices 200B, 201B, and the like.

The near field communication networks 60A, 60B each cover an area (a distance for terminal devices can communicate) of approximately 500 m. Meanwhile, the public radio communication network 30 covers a wider area than the near field communication networks 60A, 60B. The multiple terminal devices (the terminal devices 200A, 201A, and the like) configuring each of the near field communication networks 60A, 60B has a function as a device such as an electric power meter of measuring a power consumption, and is installed in a household (residence). The terminal device receives commands from the MDMS 20 and transmits small data such as measurement data of the electric power meter.

The relay apparatus 100A (100B) is provided between the near field communication network 60A (60B) and the public radio communication network 30. Specifically, the relay apparatus 100A is provided between the near field communication network 60A and the radio base station 40 configuring the public radio communication network 30. Similarly, the relay apparatus 100B is provided between the near field communication network 60B and the radio base station 40.

Each of the relay apparatuses 100A, 100B is an apparatus having a function as a concentrator to aggregate the terminal devices configuring the near field communication network 60A, 60B, and a function as an access router of the public radio communication network 30.

### (2) Functional Block Configuration of Communication System

Next, a functional block configuration of the communication system 10 is described. Specifically, functional block configurations of the relay apparatus 100A and the terminal device 200A are described.

### (2.1) Relay Apparatus 100A

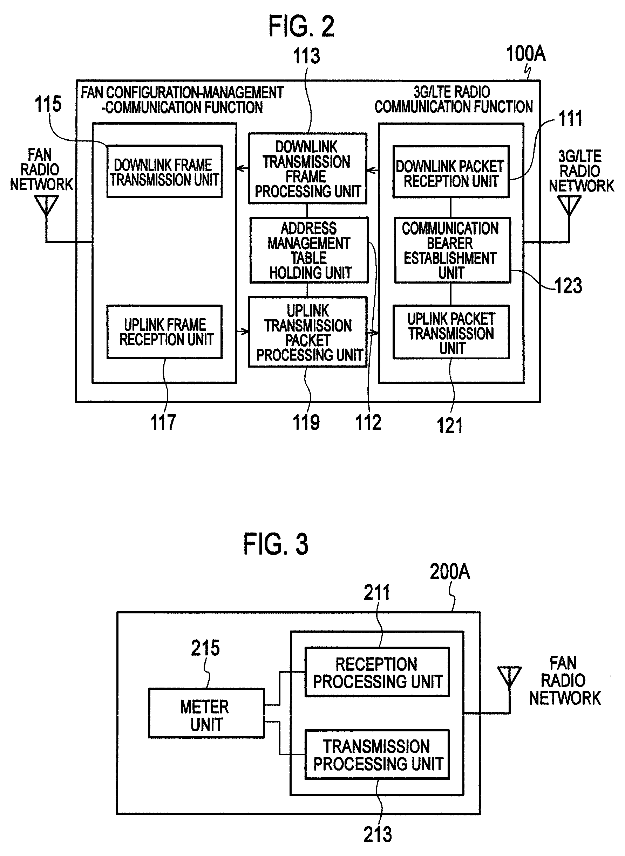

Fig. 2 is a functional block configuration diagram of the relay apparatus 100A. As illustrated in Fig. 2, the relay apparatus 100A includes a downlink packet reception unit 111, an address management table holding unit 112, a downlink transmission frame processing unit 113, a downlink frame transmission unit 115, an uplink frame reception unit 117, an uplink transmission packet processing unit 119, an uplink packet transmission unit 121, and a communication bearer establishment unit 123. Note that the relay apparatus 100B also has a functional block configuration similar to the configuration of the relay apparatus 100A.

Moreover, as illustrated in Fig. 2, the downlink packet reception unit 111, the uplink packet transmission unit 121, and the communication bearer establishment unit 123 implement a 3G/LTE radio communication function, whereas the downlink frame transmission unit 115 and the uplink frame reception unit 117 implement a FAN configuration-management-communication function. In other words, the 3G/LTE radio communication function provides the aforementioned access router function, and the FAN configuration-management-communication function provides the concentrator function.

The downlink packet reception unit 111 receives a downlink packet transmitted from the MDMS 20 via the public radio communication network 30. The downlink packet includes, as payload, identifiers of the terminal devices configuring the near field communication network 60A (hereinafter, terminal identifiers), and a command(s) to the terminal devices (for example, a command to transmit measurement data).

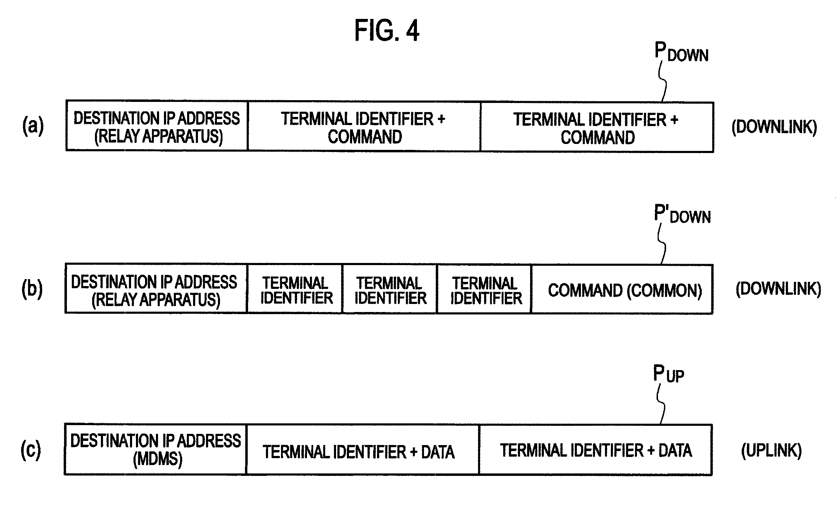

A part (a) of Fig. 4 illustrates a configuration example of a downlink packet P_{DOWN} received by the downlink packet reception unit 111. As illustrated in the part (a) of Fig. 4, the downlink packet P_{DOWN} includes a destination IP address (an address of the relay apparatus 100A, 100B (access router)), and a combination of a terminal identifier and a command. As illustrated in the part (a) of Fig. 4, the downlink packet P_{DOWN} may include two or more combinations each formed of a terminal identifier and a command.

A part (b) of Fig. 4 illustrates a configuration example of another downlink packet P'_{DOWN} received by the downlink packet reception unit 111. As illustrated in the part (b) of Fig. 4, the downlink packet P'_{DOWN} may include two or more terminal identifiers and a single command. In other words, instead of the configuration of the downlink packet P_{DOWN} including two or more combinations of terminal identifiers and commends, the downlink packet P'_{DOWN} includes a single command associated with two or more terminal identifiers. In the case where the same command is transmitted to multiple terminal devices, the downlink packet P'_{DOWN} may be preferably used since the data volume can be kept small.

The address management table holding unit 112 holds an address management table TB1 (see Fig. 1) in which the identifier of each terminal device, and an address of the terminal device in the near field communication network 60A (for example, the MAC address) are associated with each other. The address management table TB1 includes the unique MAC address necessary for routing in the near field communication network 60A (FAN), the terminal identifier, and an IP address of the relay apparatus 100A (access router).

The downlink transmission frame processing unit 113 generates a terminal device-destined frame based on the terminal identifier contained in the downlink packet (IP packet) received by the downlink packet reception unit 111. The terminal device-destined frame contains a command destined to the address of the terminal device associated with the terminal identifier in the address management table TB1. More specifically, the downlink transmission frame processing unit 113 generates a terminal device-destined frame containing the (FAN) address of the terminal device, and inserts the payload (command) contained in the received downlink packet into the generated terminal device-destined frame. Note that the terminal device-destined frame is a transfer frame conforming to the IEEE802.15.4e/g standard, and contains an identifier necessary for intra-FAN routing to the terminal device (for example, the MAC address), a command to the terminal device, and other things.

Moreover, if the downlink packet reception unit 111 receives the downlink packet P'_{DOMN} illustrated in the part (b) of Fig. 4, the downlink transmission frame processing unit 113 can generate terminal device-destined frames based on the downlink packet P'_{DOWN}, namely, based on two or more terminal identifiers included in the downlink packet P'_{DOWN}, the terminal device-destined frames respectively destined to the two or more terminal devices, and containing the same command.

The downlink frame transmission unit 115 transmits the terminal device-destined frames generated by the downlink transmission frame processing unit 113 to the near field communication network 60A.

The uplink frame reception unit 117 receives uplink frames from multiple terminal devices (the terminal devices 200A, 201A, and the like) configuring the near field communication network 60A. Note that the uplink frame is a packet conforming to IEEE802.15.4e/g, and contains an identifier of a terminal device (for example, the MAC address), measurement data, and other things.

The uplink transmission packet processing unit 119 generates a server-destined packet (IP packet) containing two or more combinations each formed of a terminal identifier and data (measurement data or the like) destined to the MDMS 20 (server).

A part (c) of Fig. 4 illustrates a configuration example of a server-destined packet PUP (specifically, an IP packet destined to the MDMS 20) sent from the relay apparatus 100A. As illustrated in the part (c) of Fig. 4, the server-destined packet PUP includes a destination IP address (the address of the MDMS 20), and a combination of a terminal identifier and data (measurement data or the like). As illustrated in the part (c) of Fig. 4, the server-destined packet PUP may include two or more combinations of terminal identifiers and data received by the relay apparatus 100A within a predetermined period of time.

The uplink packet transmission unit 121 provides functions of OSI layer 1 and layer 2 to transmit the server-destined packet PUP generated by the uplink transmission packet processing unit 119 to the public radio communication network 30.

The communication bearer establishment unit 123 provides a function of OSI layer 3 (IP) such as establishing a communication bearer with the GGSN/PGW 50 (gateway device) configuring the public radio communication network 30. The communication bearer establishment unit 123 holds the established communication bearer for communications with the MDMS 20, the terminal devices 200A, 201A, and the like. The communication bearer is a logical communication channel established in the public radio communication network 30. The communication bearer is established in accordance with a procedure specified in 3G or LTE (for example, RRC Connection Request and Setup massage). Through this procedure, IP communications between the relay apparatus 100A and the MDMS 20 are enabled.

In the present embodiment, the communication bearers established between the relay apparatus 100A and the public radio communication network 30 and established within the public radio communication network 30 are shared by communications between the multiple terminal devices and the MDMS 20. In other words, the downlink packet reception unit 111 can receive a downlink packet destined to different terminal devices via the held communication bearers. Meanwhile, via the held communication bearers, the uplink transmission packet processing unit 119 can transmit multiple server-destined packets based on uplink frames transmitted from different terminal devices.

### (2.2) Terminal Device 200A

Fig. 3 is a functional block configuration diagram of the terminal device 200A. As illustrated in Fig. 3, the terminal device 200A includes a reception processing unit 211, a transmission processing unit 213, and a meter unit 215. Here, the terminal devices 201A, 200B, 201B also have functional block configurations similar to that of the terminal device 200A.

The reception processing unit 211 executes processing on a terminal device-destined frame transmitted from the relay apparatus 100A. Specifically, the reception processing unit 211 receives the terminal device-destined frame from the relay apparatus 100A via the near field communication network 60A (FAN radio network), and executes processing based on the command contained in the terminal device-destined frame.

The transmission processing unit 213 transmits an uplink frame containing the identifier of the terminal device and data destined to the MDMS 20 (server) (measurement data or the like) to the relay apparatus 100A via the near field communication network 60A (FAN radio network).

The meter unit 215 measures data such as a power consumption based on the command outputted from the reception processing unit 211 (for example, output of the measurement data). Moreover, the meter unit 215 outputs the data on the power consumption measured based on the command to the uplink packet transmission unit 121. Here, what is measured by the meter unit 215 is not limited to the power consumption, but may be a tap water or gas consumption.

### (3) Operation of Communication System

Next, description is provided for an operation of the aforementioned communication system 10. Specifically, description is provided for a sequence of transmitting commands from the MDMS 20 to the terminal devices 200A, 201A, and a sequence of transmitting data from the terminal devices 200A, 201A to the MDMS 20.

### (3.1) Sequence of Transmitting Commands from MDMS

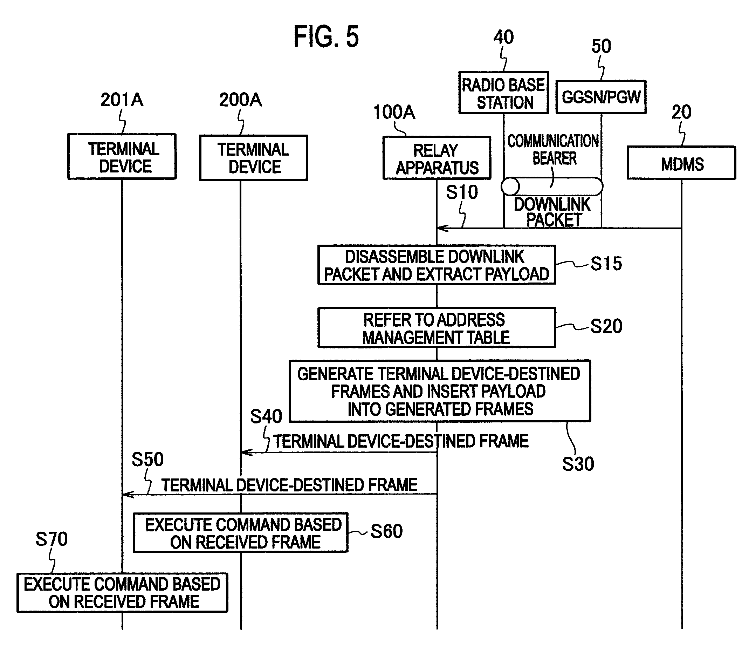

Fig. 5 illustrates a sequence of transmitting commands from the MDMS 20 to the terminal devices 200A, 201A.

As illustrated in Fig. 5, the identifiers (terminal identifiers) of terminal devices (the terminal devices 200A, 201A, herein) to which to transmit commands are inputted to the MDMS 20 by an operator of the MDMS 20. When receiving such input, the MDMS 20 refers to an address management table TB2 (see Fig. 1) held in the MDMS 20, and derives the IP address of the relay apparatus 100A (access router) associated with each of the terminal identifiers. As illustrated in Fig. 1, the address management table TB2 includes the name of a residence in which each terminal device is installed (meter location), the terminal identifier, and an IP address of a relay apparatus (access router).

The MDMS 20 transmits an IP packet (a downlink packet P_{DOWN} or downlink packet P'_{DOWN}; see the parts (a) and (b) of Fig. 4) to the relay apparatus 100A via the public radio communication network 30 (S10). In the IP packet, the IP address of the relay apparatus of the destination target is set in the IP header, and a communication content and the terminal identifier are stored in the IP Packet payload. Here, the transmission of the downlink packet uses the communication bearer held between the relay apparatus 100A and the GGSN/PGW 50.

The relay apparatus 100A receiving the downlink packet (IP packet) confirms that the final destination of this IP packet is the relay apparatus 100A itself, and thereafter extracts the payload by disassembling the IP packet (S15). Then, the relay apparatus 100A refers to the address management table TB1 (S20).

The relay apparatus 100A generates frames destined to the terminal devices 200A, 201A (terminal device-destined frames) based on the address management table TB1 (S30). The terminal device-destined frames each have a configuration conforming to the standard of the near field communication network 60A (FAN radio network), and employ the frame configuration under the FAN radio network standard. Then, the relay apparatus 100A inserts the payload extracted in step S15 into each of the terminal device-destined frames.

To be more specific, the relay apparatus 100A generates the terminal device-destined frame containing the MAC address (0a:0b:0c:0d:01) of the terminal device 200A associated with the terminal identifier (MT-CityA-0001) of the terminal device 200A based on the address management table TB1, inserts the command (payload) contained in the received IP packet into the generated terminal device-destined frame, and then transmits the terminal device-destined frame to the terminal device 200A. Similarly, the relay apparatus 100A generates the terminal device-destined frame containing the MAC address (0a:0b:0c:0d:02) of the terminal device 201A associated with the terminal identifier (MT-CityA-0500) of the terminal device 201A based on the address management table TB1, inserts the command (payload) contained in the received IP packet into the generated terminal device-destined frame, and then transmits the terminal device-destined frame to the terminal device 201A (S40, S50). Note that the processing in S40 and S50 is processing conforming to the FAN radio network standard such as IEEE802.15.4e/g.

The terminal devices 200A, 201A execute the commands based on the terminal device-destined frames received from the relay apparatus 100A. More specifically, the terminal devices 200A, 201A each execute the command (for example, the measurement of the power consumption) based on information contained as the payload in the received terminal device-destined frame (S60, S70).

### (3.2) Sequence of Transmitting Data from Terminal Device

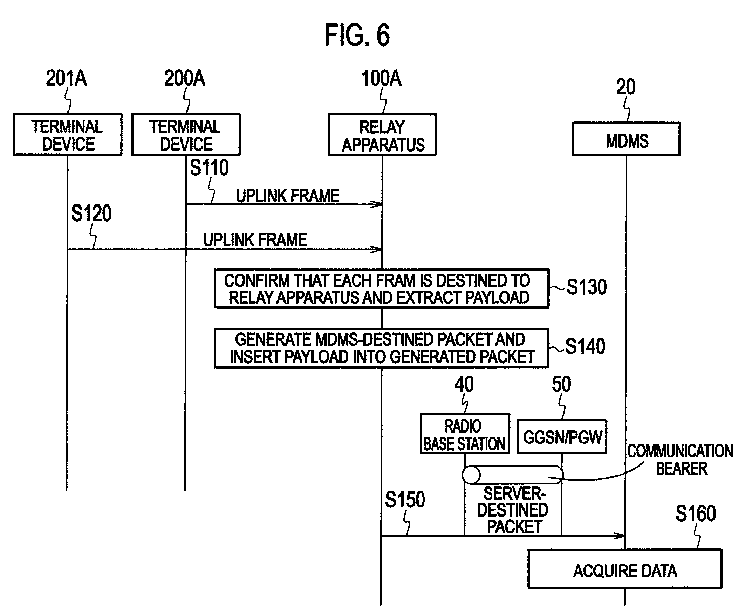

Fig. 6 illustrates a sequence of transmitting data from the terminal devices 200A, 201A to the MDMS 20.

As illustrated in Fig. 6, each of the terminal devices 200A, 201A transmits an uplink frame containing its own MAC address and data (measurement data or the like) to the relay apparatus 100A (S110, S120). Note that the processing in S110 and S120 is processing conforming to the FAN radio network standard such as IEEE802.15.4e/g.

The relay apparatus 100A confirms that the destination of the received uplink frame is the relay apparatus 100A itself, and thereafter extracts the payload contained in the uplink frame (S130). Then, the relay apparatus 100A generates an IP packet destined to the MDMS 20 (server-destined packet), and inserts the extracted payload (data) into the generated IP packet (S140).

More specifically, the relay apparatus 100A extracts the terminal identifier (MT-CityA-0001) of the terminal device 200A, and the data contained in the uplink frame, and inserts the extracted terminal identifier and data into a server-destined packet PUP (see the part (c) of Fig. 4). Here, as illustrated in the part (c) of Fig. 4, the IP address of the MDMS 20 is set in the destination IP address of the server-destined packet PUP destined to the MDMS 20. Similarly, the relay apparatus 100A generates the server-destined packet PUP in which the terminal identifier (MT-CityA-0050) of the terminal device 201A, and the data contained in the uplink frame are inserted in a payload part. As a result, as illustrated in the part (c) of Fig. 4, the server-destined packet PUP contains two or more combinations of the identifiers of the terminal devices and the data.

The relay apparatus 100A transmits the server-destined packet PUP in which the multiple combinations of the terminal identifiers and the data are contained in the payload part to the MDMS 20 (S150). Here, the transmission of the server-destined packet PUP uses the communication bearer of the public radio communication network 30 held between the relay apparatus 100A and the GGSN/PGW 50.

The MDMS 20 acquires the data contained in the payload part of the received server-destined packet PUP (S160).

### (4) Configuration of Address Management Table

Next, description is further provided for the configurations of the aforementioned address management table (address management table TB1) of the relay apparatus 100A and the aforementioned address management table (address management table TB2) of the MDMS 20. Here, the relay apparatus 100B also holds a similar address management table.

### (4.1) Address Management Table of Relay Apparatus 100A

The address management table (address management table TB1) of the relay apparatus 100A includes the following elements.

### (a) IP Address of Relay Apparatus 100A (Access Router)

The concentrator function configuring a part of the relay apparatus 100A and the access router function configuring a part of the relay apparatus 100A for connection of the public radio communication network 30 using the IP network are essential. The access router function takes roles of basically terminating layer 3 (IP layer), and aggregating the terminal devices (meters) under the control of the concentrator. Since IEEE802.15.4e/g only covers the specifications of layer 2 (MAC layer) and lower layer, the capabilities of the layer 3 are indispensable to perform communications via an IP network. Here, the IP address may be any unique IP address without duplication, or may be an IP address permanently allocated.

### (b) Terminal Identifier

The terminal identifier may be in any number form as long as an identifier in the number form allows the operator of the MDMS 20 to uniquely identify a terminal device (meter) installed in a particular residence. The terminal identifier may be in a form, such as MT-CityA-0001, with which the operator can identify a device uniquely as described above, or may be an IMEI (International Mobile Equipment Identifier) which is used in 3G, or the MAC address of the terminal device.

### (c) MAC Address of Near field communication network

The MAC address may be in any number form as long as a MAC address in the number form allows a terminal device to be uniquely identified within the near field communication network (SUN, FAN). The MAC address is an identification address of layer 2, which is frequently used in a wireless LAN environment of an IP network. If there is another type of identifier specified in IEEE802.15.4e/g, the identifier of the type may be used.

### (4.2) Address Management Table of MDMS 20

The address management table (address management table TB2) of the MDMS 20 includes the following elements.

### (a) Residence Name (Meter Location or Owner Identifier)

This identifier may be in any form as long as an identifier in the form allows the operator of the MDMS 20 to identify a residence where a particular terminal device (meter) is installed. Since the power consumption is measured for billing purposes, the residence name is preferably associated with billing information of a consumer of the power.

### (b) Terminal Identifier

The terminal identifier herein is the same or similar to that in the address management table of the relay apparatus 100A. Specifically, the terminal identifier may be in any number form as long as an identifier in the number form allows the operator of the MDMS 20 to uniquely identify a terminal device (meter) installed in a particular residence.

### (c) IP Address of Relay Apparatus 100A (Access Router)

The IP address herein is the same or similar to that in the address management table of the relay apparatus 100A. That is to say, the IP address may be any unique IP address without duplication, or may be an IP address permanently allocated.

Here, the address management table of the MDMS 20 may be generated by application software installed in a personal computer configuring the MDMS 20. Here, it is assumed that each terminal device transmits about 500 bytes of data at time intervals of about 30 minutes, and that the terminal devices transmit data almost randomly. The destination to which each terminal device transmits the data is the concentrator (the relay apparatus 100A) (the capabilities under IEEE802.15.4e/g) of the near field communication network to which the terminal device itself belongs. Then, each concentrator is assumed to aggregate about 500 terminal devices.

For example, let us assume that 100 terminal devices transmit 500 bytes of data simultaneously. In this case, the data volume is 50 kbytes (50×103 bytes ≈ 400 kbits). For example, since the transmission rate of 3G (HSPA) is about 384 kbps, all the data can be transmitted within approximately one second. If the relay apparatus 100A receives a larger volume of data, the transmission timings of the data (packets) may be shifted by a slight time lag (for example, several seconds) in order to avoid congestion.

### (4.3) Operation for Case of Addition or Deletion of Terminal Device (Meter)

Here, description is provided for an operation in the case where a terminal device (meter) is added to or deleted from the below of a particular relay apparatus (concentrator/access router).

### (a) Case of New Addition of Terminal Device

In the case where a terminal device is newly added to the below of a particular concentrator, a routing configuration in the near field communication network and identification of the concentrator are provided by the capabilities under IEEE802.15.4e/g. Setting of the upper limit value of the capacity of the relay apparatus in advance enables prevention of addition of a terminal device at or beyond the upper limit value, and also enables detection of addition of a terminal device at or beyond the upper limit value by transmitting error code or doing the like.

If the addition of a terminal device beyond the upper limit value of the capacity of the relay apparatus is needed, a new relay apparatus (concentrator) is installed.

Moreover, if a terminal device is newly added, the address management table (address management table TB1) of the relay apparatus is updated based on information transmitted from the terminal device, and the update information is also transmitted to the corresponding MDMS 20 (on the precondition that the IP address or APN of the MDMS is previously inputted).

When the MDMS 20 receives the update information, the MDMS 20 updates the address management table (address management table TB2) held in the MDMS 20. Here, the information on the residence name (meter location) and the like is inputted by the operator of the MDMS 20 based on the billing information or the like separately acquired.

Note that the GGSN/PGW 50 and the MDMS 20 may communicate with each other usually in accordance with protocol called DIAMETER. Instead, the communications may be performed in accordance with IP.

### (b) Case or Removal or Cessation of Terminal Device

In the case where a terminal device included in the near field communication network is removed or ceased, the address management table is updated in an opposite way from that for the case of the addition. Specifically, an entry for the terminal device is deleted from the address management table. In addition, when the function of a particular terminal device is ceased by the MDMS 20, the address management table is also updated in the similar way.

### (5) Automatic Establishment of Radio Access Bearer and Automatic Configuration of Intra-Network Communication Bearer

In order to dynamically avoid congestion in the public radio communication network 30, a radio access bearer to be established in the public radio communication network 30 (specifically between the relay apparatus 100A (100B) and the radio base station 40) may be automatically established and added. Meanwhile, a communication bearer (between the radio base station 40 and the GGSN/PGW 50) is generally capable of transmitting a larger volume of traffic than the radio access bearer, but the communication bearer may also be established and added automatically.

To be more specific, such automatic establishment is implemented on the precondition that application software installed in the relay apparatus 100A (100B) is capable of acquiring a volume of data to be transmitted to the MDMS 20 from the relay apparatus 100A (100B) at one time. In addition, the application software is assumed to know the transmission rate of the radio access bearer established in accordance with 3G or LTE (for example, 384 kbps in the case of 3G).

For instance, in the case of 100 terminal devices as described above, the volume of data is about 50 kbytes. If the number of terminal devices is increased to 200, the total volume of data increases to 100 kbytes, which is equivalent to 800 kbps. The transmission rate in this condition exceeds a transmission rate per radio access bearer of 384 kbps, and the relay apparatus 100A automatically establishes and adds a radio access bearer. If two bearers of 384 kbps are established, 800 kbits of data can be transmitted within about one second.

### (7) Operation and Effect

According to the foregoing communication system 10, the relay apparatus 100A generates a terminal device-destined frame based on the identifier of the terminal device (for example, the terminal device 200A) contained in the received downlink packet, the terminal device-destined frame containing a command destined to the address (MAC address) of the terminal device 200A associated with the identifier of the terminal device 200A in the address management table TB1, and transmits the generated terminal device-destined frame to the near field communication network 60A. Then, the terminal device 200A receives the terminal device-destined frame from the relay apparatus 100A, and executes the processing based on the command contained in the terminal device-destined frame.

Even in the case of implementing control of meters deployed in households or data acquisition from the meters by connecting a near field communication network such as a FAN or SUN to a wide area communication network such as the public radio communication network 30, the foregoing way of operation does not require address allocation and establishment of communication bearers in the wide area communication network corresponding to the number of the meters. In other words, according to the communication system 10, control of devices such as electric power meters and data acquisition from the devices can be achieved efficiently by connecting a near field communication network such as a FAN or SUN to a wide area communication network such as a public radio communication network.

More specifically, according to the communication system 10, it is possible to achieve quantum leaps in aggregation rates of the number of addresses and the number of communication bearers (including radio access bearers), both of which are necessary for communications with terminal devices. Therefore, the management unit can be kept as low as 1/500 to 1/1000 of the management unit in the case where communications are performed individually with terminal devices. Consequently, the communication resources (radio resources, IP addresses and the like) needed in the public radio communication network 30 can be largely cut down, and the technical and cost constraints may also be solved.

Moreover, in the foregoing embodiment, the relay apparatus 100A (100B) receives the downlink packet containing the identifiers of multiple terminal devices and a single command (see the part (b) of Fig. 4), generates terminal device-destined frames each containing the command for the multiple terminal devices, respectively, and transmits the generated terminal device-destined frames to the near field communication network. This way of operation does require a command to be associated with each of the terminal devices, and makes it possible to further reduce the volume of data needed to transmit the command.

### (8) Other Embodiment

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

For instance, the foregoing embodiment of the present invention is described by taking the smart utility network (SUN) and the field area network (FAN) as the examples. The present invention, however, is not limited to these near field communication networks, but may be applied to any of other types of autonomous distributed radio communication networks such as a HEMS (Home Energy Management System), a smart city and a smart grid, or a sensor network.

Moreover, in the foregoing embodiment, the public radio communication network 30 of 3G or LTE is used as the example of the wide area communication network. Instead, a wireless LAN may be used in place of 3G or LTE, or a wired communication network may be used in place of the radio communication network.

The features of the present embodiment may also be expressed as follows. A first feature of the present invention is summarized as a communication system 10 (communication system) including: a terminal device (for example, a terminal device 200A or 201A) ; and a relay apparatus 100A or 100B (relay apparatus) provided between a near field communication network 60A or 60B (near field communication network) configured by a plurality of the terminal devices, and a public radio communication network 30 (wide area communication network) covering a wider area than the near field communication network. Here, the relay apparatus includes: a downlink packet reception unit 111 (downlink packet reception unit) for receiving a downlink packet from a server connected to the wide area communication network, the downlink packet containing an identifier of the terminal device and a command to the terminal device; an address management table holding unit 112 (table holding unit) for holding an address management table TB1 (address management table) in which the identifier of the terminal device and an address of the terminal device in the near field communication network are associated with each other; and a downlink transmission frame processing unit 113 (downlink transmission frame processing unit) for generating a terminal device-destined frame based on the identifier of the terminal device contained in the downlink packet received by the downlink packet reception unit, the terminal device-destined frame containing the command destined to the address of the terminal device associated with the identifier of the terminal device in the address management table, and to transmit the generated terminal device-destined frame to the near field communication network; and the terminal device includes a reception processing unit 211 (reception processing unit) for receiving the terminal device-destined frame from the relay apparatus, and execute processing based on the command contained in the terminal device-destined frame.

In the first feature of the present invention, the terminal device may include a transmission processing unit 213 (transmission processing unit) for transmitting an uplink frame to the relay apparatus via the near field communication network, the uplink frame containing the identifier of the terminal device and data destined to the server, and the relay apparatus may include: an uplink frame reception unit 117 (uplink frame reception unit) for receiving the uplink frames from the plurality of terminal devices; and an uplink transmission packet processing unit 119 (uplink transmission packet processing unit) for transmitting a server-destined packet to the wide area communication network based on the address management table, the server-destined packet containing a plurality of combinations of the identifiers of the terminal devices and the data destined to the server.

A second feature of the present invention is summarized as a relay apparatus provided between a near field communication network configured by a terminal device and a plurality of the terminal devices, and a wide area communication network covering a wider area than the near field communication network, the relay apparatus including: a downlink packet reception unit for receiving a downlink packet containing an identifier of the terminal device and a command to the terminal device from a server connected to the wide area communication network; a table holding unit for holding an address management table in which the identifier of the terminal device and an address of the terminal device in the near field communication network are associated with each other; and a downlink transmission frame processing unit for generating a terminal device-destined frame based on the identifier of the terminal device contained in the downlink packet received by the downlink packet reception unit, the terminal device-destined frame containing the command destined to the address of the terminal device associated with the identifier of the terminal device in the address management table, and to transmit the generated terminal device-destined frame to the near field communication network.

In the second feature of the present invention, the relay apparatus may include: an uplink frame reception unit for receiving uplink frames from a plurality of the terminal devices; and an uplink transmission packet processing unit for transmitting a server-destined packet to the wide area communication network, the server-destined packet containing a plurality of combinations of the identifiers of the terminal devices and data destined to the server.

In the second feature of the present invention, the relay apparatus may include a communication bearer establishment unit 123 (communication bearer establishment unit) for establishing a communication bearer with a gateway device configuring the wide area communication network, and hold the established communication bearer. Here, the downlink packet reception unit may receive a downlink packet destined to different ones of the terminal devices via the held communication bearer.

In the second feature of the present invention, the relay apparatus may include a communication bearer establishment unit for establishing a communication bearer with a gateway device configuring the wide area communication network, and hold the established communication bearer. Here, the uplink transmission packet processing unit may transmit, via the held communication bearer, a plurality of the server-destined packets transmitted from different ones of the terminal devices.

In the second feature of the present invention, the downlink packet reception unit may receive the downlink packet containing the identifiers of a plurality of the terminal devices, and the single command, and the downlink transmission frame processing unit may generate terminal device-destined frames each containing the command for the plurality of the terminal devices, respectively, based on the downlink packet, and transmit the generated terminal device-destined frames to the near field communication network.

A third feature of the present invention is summarized as a communication method to be executed by a terminal device and a relay apparatus provided between a near field communication network configured by a plurality of the terminal devices, and a wide area communication network covering a wider area than the near field communication network, the method including the steps of: causing the relay apparatus to receive a downlink packet from a server connected to the wide area communication network, the downlink packet containing the identifier of the terminal device and a command to the terminal device; causing the relay apparatus to generate a terminal device-destined frame based on the identifier of the terminal device contained in the received downlink packet, and based on an address management table in which the identifier of the terminal device and an address of the terminal device in the near field communication network are associated with each other, and to transmit the generated terminal device-destined frame to the near field communication network, the terminal device-destined frame containing the command destined to the address of the terminal device associated with the identifier of the terminal device in the address management table; and causing the terminal device to receive the terminal device-destined frame from the relay apparatus, and to execute processing based on the command contained in the terminal device-destined frame.

As described above, the present invention naturally includes various embodiments which are not described herein. Accordingly, the technical scope of the present invention should be determined only by the matters to define the invention in the scope of claims regarded as appropriate based on the description.

Note that the entire content of Japanese Patent Application No. 2013-066723 (filed on March 27, 2013) is incorporated by reference in the present specification.

### INDUSTRIAL APPLICABILITY

According to the features of the present invention, it is possible to provide a communication system, a relay apparatus, and a communication method capable of achieving control of devices such as electric power meters and data acquisition from the devices efficiently by connecting a near field communication network such as a smart utility network to a wide area communication network such as a public radio communication network.

### EXPLANATION OF THE REFERENCE NUMERALS

- 10: communication system
- 20: MDMS
- 30: public radio communication network
- 40: radio base station
- 50: GGSN/PGW
- 60A, 60B: near field communication network
- 100A, 100B: relay apparatus
- 111: downlink packet reception unit
- 112: address management table holding unit
- 113: downlink transmission frame processing unit
- 115: downlink frame transmission unit
- 117: uplink frame reception unit
- 119: uplink transmission packet processing unit
- 121: uplink packet transmission unit
- 123: communication bearer establishment unit
- 200A, 201A: terminal device
- 211: reception processing unit
- 213: transmission processing unit
- 215: meter unit

## Claims

1. A communication system comprising:
a terminal device; and
a relay apparatus provided between a near field communication network configured by a plurality of the terminal devices, and a wide area communication network covering a wider area than the near field communication network, wherein
the relay apparatus comprises:
a downlink packet reception unit for receiving a downlink packet from a server connected to the wide area communication network, the downlink packet containing an identifier of the terminal device and a command to the terminal device;
a table holding unit for holding an address management table in which the identifier of the terminal device and an address of the terminal device in the near field communication network are associated with each other; and
a downlink transmission frame processing unit for generating a terminal device-destined frame based on the identifier of the terminal device contained in the downlink packet received by the downlink packet reception unit, the terminal device-destined frame containing the command destined to the address of the terminal device associated with the identifier of the terminal device in the address management table, and to transmit the generated terminal device-destined frame to the near field communication network; and
the terminal device comprises a reception processing unit for receiving the terminal device-destined frame from the relay apparatus, and execute processing based on the command contained in the terminal device-destined frame.

2. The communication system according to claim 1, wherein
the terminal device comprises a transmission processing unit for transmitting an uplink frame to the relay apparatus via the near field communication network, the uplink frame containing the identifier of the terminal device and data destined to the server, and
the relay apparatus comprises:
an uplink frame reception unit for receiving the uplink frames from the plurality of terminal devices; and
an uplink transmission packet processing unit for transmitting a server-destined packet to the wide area communication network based on the address management table, the server-destined packet containing a plurality of combinations of the identifiers of the terminal devices and the data destined to the server.

3. A relay apparatus provided between a near field communication network configured by a terminal device and a plurality of the terminal devices, and a wide area communication network covering a wider area than the near field communication network, the relay apparatus comprising:
a downlink packet reception unit for receiving a downlink packet containing an identifier of the terminal device and a command to the terminal device from a server connected to the wide area communication network;
a table holding unit for holding an address management table in which the identifier of the terminal device and an address of the terminal device in the near field communication network are associated with each other; and
a downlink transmission frame processing unit for generating a terminal device-destined frame based on the identifier of the terminal device contained in the downlink packet received by the downlink packet reception unit, the terminal device-destined frame containing the command destined to the address of the terminal device associated with the identifier of the terminal device in the address management table, and to transmit the generated terminal device-destined frame to the near field communication network.

4. The relay apparatus according to claim 3, comprising:
an uplink frame reception unit for receiving uplink frames from a plurality of the terminal devices; and
an uplink transmission packet processing unit for transmitting a server-destined packet to the wide area communication network, the server-destined packet containing a plurality of combinations of the identifiers of the terminal devices and data destined to the server.

5. The relay apparatus according to claim 3, comprising a communication bearer establishment unit for establishing a communication bearer with a gateway device configuring the wide area communication network, and hold the established communication bearer, wherein
the downlink packet reception unit receives a downlink packet destined to different ones of the terminal devices via the held communication bearer.

6. The relay apparatus according to claim 4, comprising a communication bearer establishment unit for establishing a communication bearer with a gateway device configuring the wide area communication network, and hold the established communication bearer, wherein
the uplink transmission packet processing unit transmits, via the held communication bearer, a plurality of the server-destined packets transmitted from different ones of the terminal devices.

7. The relay apparatus according to claim 3, wherein
the downlink packet reception unit receives the downlink packet containing the identifiers of a plurality of the terminal devices, and the single command, and
the downlink transmission frame processing unit generates terminal device-destined frames each containing the command for the plurality of the terminal devices, respectively, based on the downlink packet, and transmits the generated terminal device-destined frames to the near field communication network.

8. A communication method to be executed by a terminal device and a relay apparatus provided between a near field communication network configured by a plurality of the terminal devices, and a wide area communication network covering a wider area than the near field communication network, the method comprising the steps of:
causing the relay apparatus to receive a downlink packet from a server connected to the wide area communication network, the downlink packet containing the identifier of the terminal device and a command to the terminal device;
causing the relay apparatus to generate a terminal device-destined frame based on the identifier of the terminal device contained in the received downlink packet, and based on an address management table in which the identifier of the terminal device and an address of the terminal device in the near field communication network are associated with each other, and to transmit the generated terminal device-destined frame to the near field communication network, the terminal device-destined frame containing the command destined to the address of the terminal device associated with the identifier of the terminal device in the address management table; and
causing the terminal device to receive the terminal device-destined frame from the relay apparatus, and to execute processing based on the command contained in the terminal device-destined frame.
